# EUROPEAN PATENT SPECIFICATION

(11) **EP 1 645 454 B1**
(45) Date of publication and mention of the grant of the patent: **27.02.2008**
(21) Application number: 04425756.6
(22) Date of filing: 08.10.2004
(51) Int. Cl.: B60K 28/06

(54) **Equipment for detecting the action of a driver on the steering wheel of the steering system of a motor vehicle**
Vorrichtung zum Erfassen der Handlung eines Fahrers an einem Lenkrad eines Lenksystems eines Kraftfahrzeuges
Dispositif pour détecter l'action d'un conducteur sur le volant d'un système de direction d'un véhicule à moteur

(43) Date of publication of application: 12.04.2006
(73) Proprietor: C.R.F. SOCIETA' CONSORTILE PER AZIONI, 10043 Orbassano (Torino) (IT)
(72) Inventor: Chinu, Angela, 10043 Orbassano (Torino) (IT); Murdocco, Vincenzo, 10043 Orbassano (Torino) (IT); Alessandretti, Giancarlo, 10043 Orbassano (Torino) (IT); Cicilloni, Renzo, 10043 Orbassano (Torino) (IT)
(74) Representative: Quinterno, Giuseppe

(56) References cited:
- WO-A-03/070504
- GB-A- 2 390 460
- US-A- 4 586 032

## Description

The present invention relates to equipment for detecting the action of a driver on the steering wheel of the steering system of a motor vehicle.

In particular, the object of the invention is to provide equipment for detecting in good time the occurrence of certain dangerous situations in which the driver may lose control of the motor vehicle because he does not have his hands on the steering wheel.

This function is important, for example, in driving assistance systems, for which it is considered necessary for the driver to maintain almost constant control of the motor vehicle.

WO 03/070504, which relates to the closest prior art, discloses an equipment for detecting the interaction between a driver and a motor-vehicle, comprising
sensor means for supplying signals indicating the total torque acting on the steering column or shaft, and
electronic processing means which are connected to said sensor means and designed to generate signals indicating the torque applied to the steering wheel and its derivative with respect to time.

The equipment disclosed in WO 03/070504 also includes further sensor means to provide signals indicating the lateral forces acting on the vehicle.

The signals from the steering torque sensing means and those from the lateral force sensing means are coupled with each other to evaluate the reactions of the driver. The processing means detect the flanks of said signals by derivating them with respect to time and looking for the changes of sign of the derivatives. The time distance between subsequent flanks provides a measure of the reaction time of the driver.

The aforesaid object is achieved according to the invention with equipment comprising
first sensor means for supplying signals indicating the steering angle,
second sensor means for supplying signals indicating the total torque acting on the steering column or shaft, and
electronic processing means connected to they said first and second sensor means and associated with memory means in which are stored data representing a mathematical model of the steering system; the said processing means being designed
- to generate, on the basis of the signals supplied by the said sensor means and the said model of the steering system, signals or data indicating the torque applied by the driver to the steering wheel and its derivative with respect to time;
- to compare the torque applied by the driver to the steering wheel and its derivative with respect to time with a first threshold value of torque and a first threshold value of the derivative of torque respectively; and
- to generate a first indicating signal when the torque applied by the driver to the steering wheel and its derivative both remain simultaneously below the aforesaid first threshold values for at least a first reference time of predetermined duration.

The possibility of detecting the presence of the driver's hands on the steering wheel also enables improvements to be made to the strategies for actuating the steering in motor vehicles fitted with servo-assisted steering systems.

The detection of the driver's action on the steering wheel is also important for preventing the consequences of what are known as microsleeps: the information that the driver has removed his hands from the wheel for a certain period can be used to generate an alarm or a stimulus to the driver.

By contrast with prior art systems, as disclosed for instance in GB-2 390 460-A, in which the presence of the hands on the steering wheel is recognized by means of sensors of various types (pressure sensors, contact sensors, optical sensors, etc.) located on the rim of the steering wheel, this invention is relatively simple to implement and entails modest additional costs. It also makes it possible to recognize the occurrence of particular dangerous situations, such as the execution of dangerous manoeuvres or the sudden release of the steering wheel by the driver.

Other systems and equipment according to the prior art require the use of torque sensors fitted to the steering column or shaft. However, the information supplied by such sensors is not directly correlated with the driver's action on the steering column, and the recognition of the presence of the hands on the steering wheel consequently becomes less sensitive and precise, and also subject to errors due to external interference or changes in the operating conditions.

Further characteristics and advantages of the invention will be made clear by the following detailed description, provided purely by way of example and without restrictive intent, with reference to the attached drawings, in which:
Figure 1 is a schematic block diagram of equipment according to the invention, associated with the steering system of a motor vehicle, and
Figures 2 to 5 are diagrams which show, as functions of time t , examples of the variation of the torque T_{d} applied by the driver to the steering wheel and its derivative with respect to time DT_{d}, in relation to associated threshold values shown on the vertical axis, these diagrams also making it possible to explain certain operating procedures of equipment according to the invention.

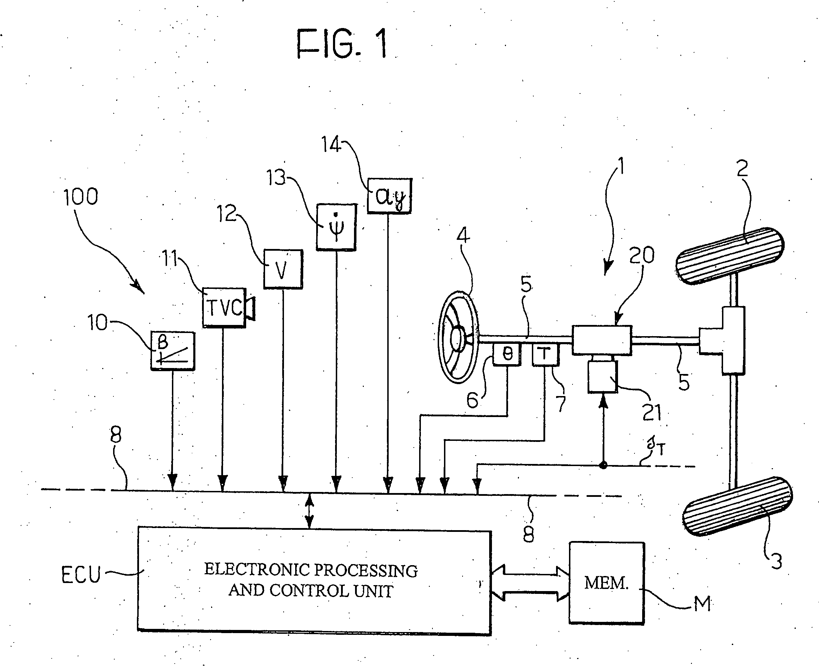

In Figure 1, the number 1 indicates the whole of a steering system of a motor vehicle, associated with two steerable wheels 2 and 3, namely the left and right wheels respectively.

The steering system 1 comprises, in a known way, a steering wheel 4 connected to a steering column or shaft 5. The end of the steering column or shaft 5 opposite the steering wheel 4 is coupled to the wheels 2 and 3 in a known way, by means of linkages and transmission mechanisms, for example of the rack and pinion type.

The steering column or shaft 5 is associated with a first electrical sensor 6 which can supply electrical signals indicating the steering angle θ, expressing the instantaneous angular position in the column 5 and of the steering wheel 4 with respect to a predetermined reference position.

The steering column or shaft 5 is also associated with a further electrical sensor 7, which can supply signals indicating the (total) torque acting on this steering column or shaft 5.

The sensors 6 and 7 form part of equipment according to the invention for detecting the action of the driver on the steering wheel 4. This equipment, indicated as a whole by the number 10, additionally comprises an electronic processing and control unit ECU, produced for example with the use of a microprocessor. The processing and control unit ECU is connected to the steering angle sensor 6 and torque sensor 7, for example by means of a communications network 8 , operating for example according to the CAN communication protocol.

The unit ECU is associated with memory devices M in which are stored data representing a predetermined mathematical model of the steering system 1.

The electronic processing and control unit ECU is designed to acquire, during operation; the signals supplied by the sensors 6 and 7 indicating, respectively, the steering angle and the total torque acting on the steering column or shaft 5, and to generate, according to the signals supplied by these sensors 6 and 7 and on the basis of the mathematical model of the steering system 1 stored in the memory devices M, signals or data indicating the torque T_{d} applied by the driver to the steering wheel 4 and its derivative with respect to time DT_{d}.

The mathematical model of the steering system 1 is conveniently a state feedback model, and the estimated torque T_{d} applied by the driver to the steering wheel is calculated by means of what is known as a reconstructor. This is conveniently implemented by means of a software module, with the use of optimal control methods and the calculation of a gain matrix which can provide a robust estimate of the reconstructed values, and which is substantially unaffected by parameter variations due to the operating conditions, such as changes in the forces acting on the tyres, different loadings of the vehicle, and the like, which may vary the dynamics of the system in different frequency ranges.

The unit ECU is also designed to compare the torque T_{d} applied by the driver to the steering wheel, and its derivative with respect to time DT_{d}, with one or more threshold values associated with each of these parameters.

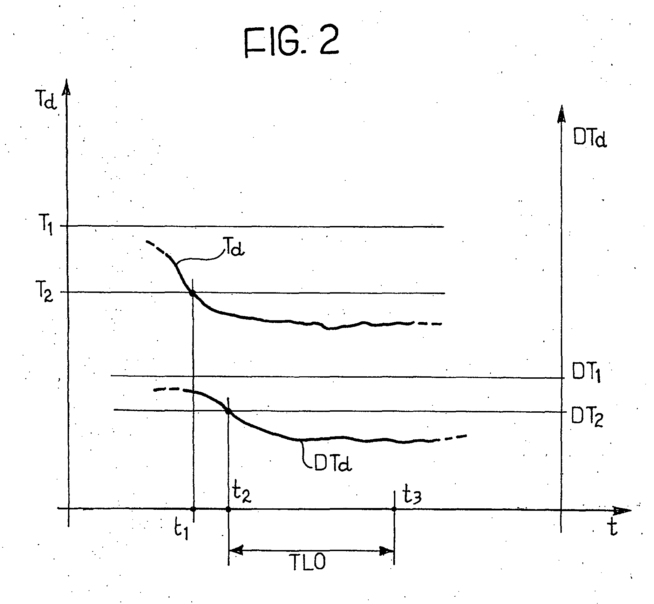

The graph in Figure 2 shows examples of variation, as a function of the time t shown on the horizontal axis, of the torque T_{d} applied by the driver to the steering wheel, as estimated by the unit ECU, and the corresponding derivative with respect to time DT_{d}. This graph also shows two threshold values T₁ and T₂ (T₁>T₂) and DT₁ and DT₂ (DT₁>DT₂) for the torque applied by the driver and its derivative.

The unit ECU is conveniently designed to generate an indicating or alarm signal, indicating the absence of the driver's hands from the steering wheel, when the torque T_{d} applied by the driver to the steering wheel 4 and its derivative DT_{d} both remain simultaneously below the respective lower thresholds T₂ and DT₂ associated with them for at least a reference time TLO having a predetermined duration.

With reference to the graphs of Figure 2, such a condition occurs, for example, at the instant indicated by t₃ in this figure. In the graph of Figure 2, the torque T_{d} applied by the driver to the steering wheel 4 falls below the lower threshold T₂ at an instant indicated by t₁. The derivative DT_{d} falls below the associated lower threshold DT₂ at an instant indicated by t₂. The torque T_{d} and its derivative DT_{d} remain simultaneously below the thresholds T2 and DT₂ respectively for the time interval running from the instant t₂ to the instant t₃, having the predetermined duration TLO.

In the situation shown qualitatively in Figure 2 by way of example, the torque T_{d} falls below the associated threshold T₂ before the derivative DT_{d} falls below the associated threshold DT₂. However, these thresholds could be crossed in the reverse order, and the indicating or alarm signal would still be generated after both of the values T_{d} and DT_{d} had remained simultaneously below the associated threshold values at least for the predetermined time TLO.

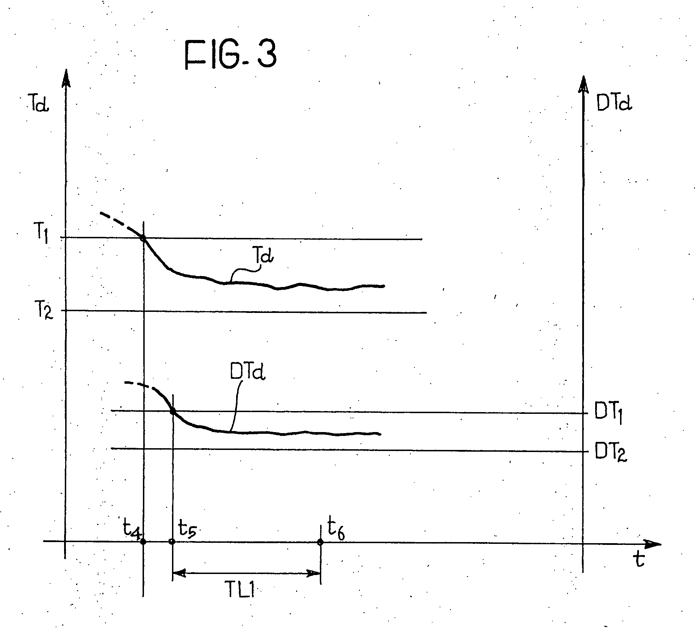

With reference to the graphs of Figures 2 and 3, the unit ECU is also designed to compare the estimated value of the torque T_{d} and the derivative DT_{d} additionally with the threshold values T₁ and DT₁.

If both the values T_{d} and DT_{d} remain simultaneously below the threshold values T₁ and DT₁ respectively for at least a period of predetermined duration TL1 (as at the instant t₆ of Figure 3), the unit ECU generates an indicating or warning signal to notify the occurrence of a continuing condition in which there is insufficient action by the driver on the steering wheel 4, which might predict the more dangerous condition in which the hands were removed from the steering wheel, identified as described above with reference to the graph of Figure 2.

With reference to Figure 1, the steering system shown therein is of the electrically powered servo-assisted type, and comprises for example an actuator unit 20 including an electric motor 21 for the electrical drive. The unit 20 is capable, in a known way, of generating, in other words of applying to the steering column or shaft 5, a torque matching a torque request signal s_{T} originating from an associated control system (not shown).

For use in a motor vehicle provided with a servo-assisted steering system of this type, the processing and control unit ECU in the equipment 10 according to the invention is designed to receive the aforesaid torque request signal s_{T}, and to modify the values of the torque thresholds T₁, T₂ and the torque derivative thresholds DT₁ and DT₂ as a function of the size of the torque indicated by the said signal s_{T} and generated by the steering actuator unit 20.

The estimation or reconstruction by the unit ECU of the torque T_{d} applied by the driver to the steering wheel 4 can be improved by taking into consideration one or more additional parameters, whose values are monitored by means of corresponding sensors or devices. Such parameters may indicate the geometry of the vehicle's path, and/or may depend on the interaction between the vehicle and the ground. The parameters depending on the geometry of the path conveniently include, for example, the inclination β of the road, detected by a suitable inclinometric sensor 10. Further information on the geometry of the path can be obtained from signals supplied, for example, by a video camera 11. Using the signals supplied by this video camera, the unit ECU can estimate (in a known way) the transverse position of the motor vehicle on the road, and in particular its instantaneous position within a lane.

The parameters that depend on the interaction between the vehicle and the ground and that can be used to improve the estimate of the torque Td include, for example, the longitudinal velocity of the motor vehicle, detected for example by a suitable sensor 12 of a known type, the yaw velocity 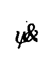 detected for example by means of a suitable sensor 13, and the yaw angle ψ, which can be deduced, for example, by integration with respect to time of the signal supplied by this sensor 13. Another parameter depending on the interaction between the vehicle and the ground which can conveniently be taken into consideration is the transverse acceleration a_{y} of the vehicle, detected by means of a suitable sensor 14.

The devices or sensors 10-14 can supply their information to the unit ECU via the network or bus 8.

In particular, the values of the thresholds T₁, T₂, DT₁ and DT₂ shown in the graphs of Figures 2 and 3 can be made variable as a function of the instantaneous transverse position of the motor vehicle within its path, and also as a function of any torque request indicated by the signal s_{T}.

The processing unit ECU is also preferably designed to calculate the transverse movement of the motor vehicle and to generate the aforesaid first indicating signal when the transverse movement of the vehicle exceeds a first predetermined threshold value before the end of the aforesaid first reference time TLO (Figure 2). The unit ECU can also be designed to generate the aforesaid second indicating signal when the transverse movement of the vehicle exceeds a second predetermined threshold value, greater than the first, before the end of the aforesaid second reference time TL1 (Figure 3).

The equipment 10 according to the invention can also be used to recognize further potentially dangerous situations, such as those occurring when the driver carries out manoeuvres to avoid obstacles, or suddenly releases the steering wheel 4 in the course of a manoeuvre which requires a constant control of the wheel, for example when driving round a very sharp corner.

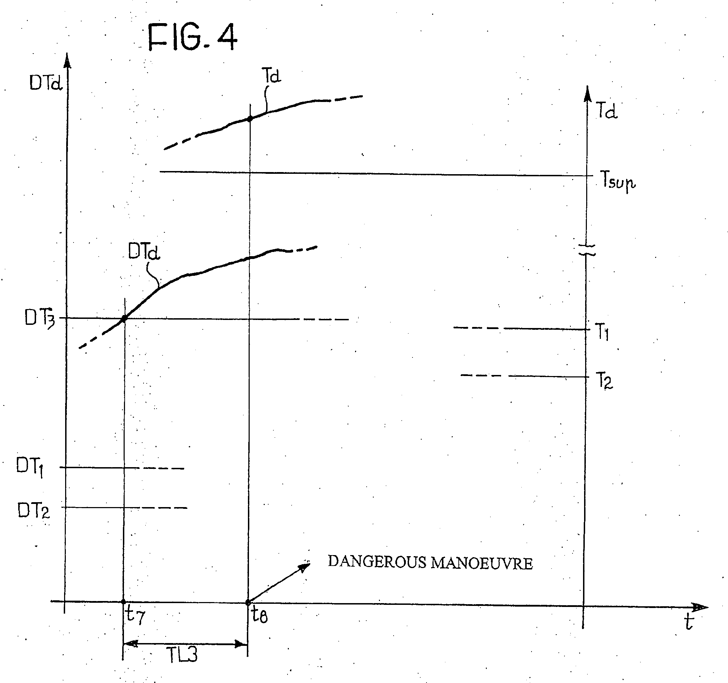

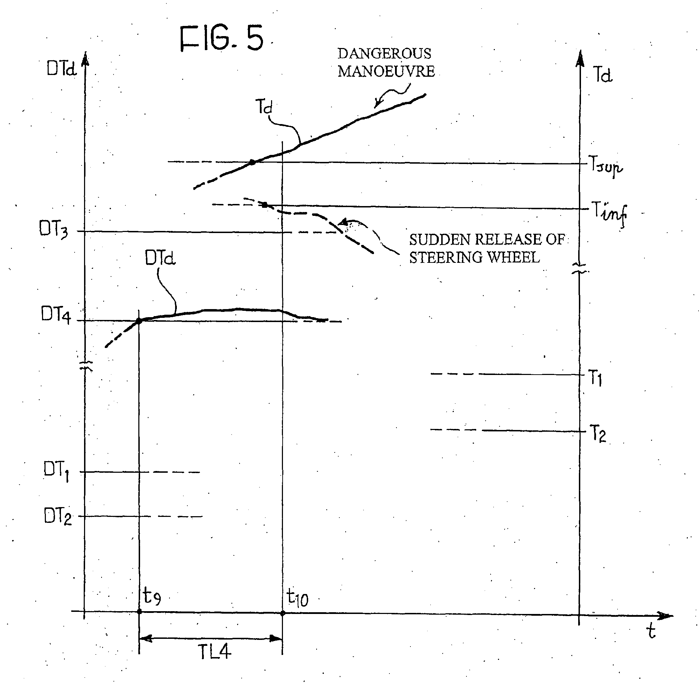

For this purpose, the control unit ECU is conveniently designed to implement the control and signalling strategies which will now be described with reference to Figures 4 and 5.

Figure 4 is a graph which shows in a qualitative way examples of variation of the torque T_{d} imparted by the driver to the steering wheel 4, and of the derivative DT_{d} of this value with respect to time, as a function of the time t shown on the horizontal axis.

With reference to the graphs of Figure 4, the processing and control unit ECU is designed to compare the torque T_{d} applied by the driver to the steering wheel 4 and its derivative with respect to time DT_{d} with respective third threshold values, indicated by T_{SUP} and DT₃, and to generate a signal indicating that a dangerous manoeuvre is being carried out when the derivative DT_{d} is greater than the threshold DT₃ and remains above this threshold for at least a predetermined time TL₃, and when the torque T_{d} is greater than the associated threshold value T_{SUP} at the end of this period.

With reference to the graphs of Figure 5, the unit ECU can conveniently be designed to compare the torque T_{d} and its derivative DT_{d} with further threshold values, indicated by T_{INF} and DT₄. These thresholds are lower than the thresholds T_{SUP} e DT₃ respectively.

The unit ECU generates a signal indicating that a dangerous manoeuvre is being carried out when the derivative DT_{d} remains between the values DT₄ and DT₃ for at least a time TL4 of predetermined duration and when at the end of this interval the torque T_{d} applied by the driver to the steering wheel 4 is increasing and greater than the upper threshold T_{SUP.}

The unit ECU is conveniently designed to generate a signal indicating the sudden release of the steering wheel 4 by the driver when the torque T_{d} is decreasing and less than the threshold T_{INF} at the end of the interval TL4 (in which the derivative DT_{d} is maintained between DT₄ and DT₃).

Clearly, provided that the principle of the invention is retained, the forms of application and the details of construction can be varied widely from what has been described and illustrated purely by way of example and without restrictive intent, without thereby departing from the scope of protection of the invention as defined by the attached claims.

## Claims

1. Equipment for detecting the action of a driver on the steering wheel (4) of the steering system (1) of a motor vehicle, comprising
first sensor means (6) for supplying signals indicating the steering angle (θ),
second sensor means (7) for supplying signals indicating the total torque (T) acting on the steering column or shaft (5), and
electronic processing means (ECU) connected to the said first and second sensor means (6, 7) and associated with memory means (M) in which are stored data representing a mathematical model of the steering system (1); the said processing means (ECU) being designed
- to generate, on the basis of the signals supplied by the said sensor means (6, 7) and the said model of the steering system (1), signals or data indicating the torque (T_{d}) applied by the driver to the steering wheel (4) and its derivative with respect to time (DT_{d});
- to compare the torque (T_{d}) applied by the driver to the steering wheel (4) and its derivative with respect to time (DT_{d}) with a first threshold value of torque (T₂) and a first threshold value of the derivative of torque (DT₂) respectively; and
- to generate a first indicating signal when the torque (T_{d}) applied by the driver to the steering wheel (4) and its derivative (DT_{d}) both remain simultaneously below the aforesaid respective first threshold values (T₂; DT₂) for at least a first reference time (TLO) of predetermined duration.

2. Equipment according to Claim 1, in which the said processing means (ECU) are also designed
- to compare the torque (T_{d}) applied by the driver to the steering wheel (4) and its derivative with respect to time (DT_{d}) with a second threshold value of torque (T₁) and with a second threshold value of the derivative of torque (DT₁) respectively, these values being greater than the aforesaid first threshold values (T₂; DT₂), and
- to generate a second indicating signal when the torque (T_{d}) applied by the driver to the steering wheel (4) and its derivative (DT_{d}) both remain simultaneously below the associated threshold values (T₁; DT₁) for at least a reference time (TL1) of predetermined duration.

3. Equipment according to Claim 1 or 2, in which the motor vehicle is provided with an electrically powered servo-assisted steering system (20, 21) for generating, in other words for applying to the steering column or shaft (5), a torque whose size matches a torque request signal (s_{T}) originating from an associated control system; the equipment (10) being **characterized in that** the said processing means (ECU) are designed to modify the aforesaid threshold values of torque (T₁, T₂) and of the derivative of torque (DT₁, DT₂) as a function of the aforesaid torque request signal (s_{T}).

4. Equipment according to any one of the preceding claims, in which the said processing means (ECU) are designed to calculate or estimate the torque (T_{d}) applied by the driver to the steering wheel (4) and its derivative with respect to time (DT_{d}) as a function of the values taken by at least a first detected parameter which depends on the geometry of the path of the vehicle.

5. Equipment according to Claim 4, in which the said processing means (ECU) are designed to calculate or estimate the torque (T_{d}) applied by the driver to the steering wheel (4) and its derivative with respect to time (DT_{d}) as a function of the inclination (β) of the path of the vehicle.

6. Equipment according to Claim 4 or 5, in which the said processing means (ECU) are designed to calculate or estimate the torque (T_{d}) applied by the driver to the steering wheel (4) and its derivative with respect to time (DT_{d}) as a function of the instantaneous position of the vehicle within a traffic lane, determined by detecting means (11) associated with the vehicle.

7. Equipment according to any one of the preceding claims, in which the said processing means (ECU) are designed to calculate or estimate the torque (T_{d}) applied by the driver to the steering wheel (4) and its derivative with respect to time (DT_{d}) as a function of the values taken by at least a second parameter which depends on the interaction between the vehicle and the ground.

8. Equipment according to Claim 7, in which the said processing means (ECU) are designed to calculate or estimate the torque (T_{d}) applied by the driver to the steering wheel (4) and its derivative with respect to time (DT_{d}) as a function of the yaw angle (ψ) of the vehicle and of its derivative with respect to time, and of the lateral acceleration (a_{y}) of the vehicle.

9. Equipment according to Claim 6, in which the said processing means (ECU) are also designed to calculate the transverse movement of the motor vehicle and to generate the aforesaid first indicating signal when the transverse movement of the vehicle exceeds a first predetermined threshold value before the end of the aforesaid first reference time (TLO).

10. Equipment according to Claim 9, in which the said processing means (ECU) are also designed to generate the aforesaid second indicating signal when the transverse movement of the vehicle exceeds a predetermined second threshold value, which is greater than the first, before the end of the aforesaid second reference time (TL₁).

11. Equipment according to any one of the preceding claims, in which the said processing means (ECU) are also designed
- to compare the torque (T_{d}) applied by the driver to the steering wheel (4) and its derivative with respect to time (DT_{d}) with respective predetermined third threshold values (T_{SUP}; DT₃), and
- to generate a signal indicating that a dangerous manoeuvre is being carried out when the said derivative (DT_{d}) exceeds the associated said third threshold value (DT₃) for a period of predetermined duration (TL3) and the torque (T_{d}) applied by the driver to the steering wheel (4) exceeds the associated third threshold value (T_{SUP}) at the end of this period (TL3).

12. Equipment according to Claim 11, in which the said processing means (ECU) are also designed
- to compare the torque (T_{d}) applied by the driver to the steering wheel (4) and its derivative (DT_{d}) with respective predetermined fourth threshold values (T_{INF}; DT₄) which are lower than the aforesaid third threshold values (T_{SUP}; DT₃);
- to generate a signal indicating that a dangerous manoeuvre is being carried out when the aforesaid derivative (DT_{d}) remains at a level between the associated third and fourth threshold values (DT₃; DT₄) for a period of predetermined duration (TL4) and the torque (T_{d}) applied by the driver to the steering wheel (4) is increasing and greater than the associated third threshold value (T_{SUP}) at the end of this period (TL4); and
- to generate a signal indicating a condition of sudden release of the steering wheel (4) when the said derivative (DT_{d}) remains at a level between the associated third and fourth threshold values (DT₃; DT₄) for the aforesaid period of predetermined duration (TL4) and the torque (T_{d}) applied by the driver to the steering wheel (4) is decreasing and lower than the associated fourth threshold value (T_{INF}) at the end of this period (TL4).

## Patentansprüche

1. Vorrichtung, mit der ermittelt werden kann, ob ein Fahrer das Lenkrad (4) des Lenksystems (1) eines Kraftfahrzeugs betätigt, wobei die Vorrichtung enthält:
eine erste Sensoreinrichtung (6), um Signale zu liefern, die den Lenkwinkel (θ) angeben,
eine zweite Sensoreinrichtung (7), um Signale zu liefern, die das gesamte Drehmoment (T) angeben, das auf die Lenksäule oder Lenkspindel (5) wirkt, und
eine elektronische Prozessoreinrichtung (ECU), die mit der ersten und mit der zweiten Sensoreinrichtung (6, 7) verbunden ist und der eine Speichereinrichtung (M) zugeordnet ist, in der Daten gespeichert sind, die ein mathematisches Modell des Lenksystems (1) kennzeichnen; wobei die Prozessoreinrichtung (ECU) so aufgebaut ist, dass sie
- aufgrund der Signale, die von den Sensoreinrichtungen (6, 7) und dem Modell des Lenksystems (1) geliefert werden, Signale oder Daten erzeugt, die das Drehmoment (T_{d}), das vom Fahrer auf das Lenkrad (4) aufgebracht wird, sowie dessen Ableitung nach der Zeit (DT_{d}) angeben;
- das vom Fahrer auf das Lenkrad (4) aufgebrachte Drehmoment (T_{d}) sowie dessen Ableitung nach der Zeit (DT_{d}) mit einem ersten Schwellenwert des Drehmoments (T₂) bzw. mit einem ersten Schwellenwert der Ableitung des Drehmoments (DT₂) vergleicht; und
- ein erstes Anzeigesignal erzeugt, wenn sowohl das vom Fahrer auf das Lenkrad (4) aufgebrachte Drehmoment (T_{d}) als auch dessen Ableitung (DT_{d}) für zumindest eine erste Bezugszeit (TL0) mit vorgegebener Dauer gleichzeitig unterhalb des oben angeführten entsprechenden ersten Schwellenwerts (T₂; DT₂) bleiben.

2. Vorrichtung gemäß Anspruch 1, wobei die Prozessoreinrichtung (ECU) weiters so aufgebaut ist, dass sie
- das vom Fahrer auf das Lenkrad (4) aufgebrachte Drehmoment (T_{d}) sowie dessen Ableitung nach der Zeit (DT_{d}) mit einem zweiten Schwellenwert des Drehmoments (T₁) bzw. mit einem zweiten Schwellenwert der Ableitung des Drehmoments (DT₁) vergleicht, wobei diese Werte größer als die oben erwähnten ersten Schwellenwerte (T₂; DT₂) sind; und
- ein zweites Anzeigesignal erzeugt, wenn sowohl das vom Fahrer auf das Lenkrad (4) aufgebrachte Drehmoment (T_{d}) als auch dessen Ableitung (DT_{d}) für zumindest eine Bezugszeit (TL1) mit vorgegebener Dauer gleichzeitig unterhalb der zugeordneten Schwellenwerte (T₁; DT₁) bleiben.

3. Vorrichtung gemäß Anspruch 1 oder 2, wobei das Kraftfahrzeug mit einem elektrisch betriebenen Lenksystem mit Servoeinrichtung (20, 21) ausgestattet ist, um, anders ausgedrückt, an die Lenksäule oder Lenkspindel (5) ein Drehmoment aufzubringen, dessen Größe einem Drehmomentanforderungs-Signal (s_{T}) angepasst ist, das von einem zugeordneten Steuersystem stammt; wobei die Vorrichtung (10) **dadurch gekennzeichnet ist, dass** die Prozessoreinrichtung (ECU) so aufgebaut ist, dass sie die oben erwähnten Schwellenwerte des Drehmoments (T₁; T₂) sowie der Ableitung des Drehmoments (DT₁, DT₂) als Funktion des oben erwähnten Drehmomentanforderungs-Signals (s_{T}) verändert.

4. Vorrichtung gemäß irgendeinem der bisherigen Ansprüche, wobei die Prozessoreinrichtung (ECU) so aufgebaut ist, dass sie das vom Fahrer auf das Lenkrad (4) aufgebrachte Drehmoment (T_{d}) sowie dessen Ableitung nach der Zeit (DT_{d}) als Funktion von Werten berechnet oder abschätzt, die man von zumindest einem ersten ermittelten Parameter erhält, der von der Geometrie der Fahrstrecke des Fahrzeugs abhängt.

5. Vorrichtung gemäß Anspruch 4, wobei die Prozessoreinrichtung (ECU) so aufgebaut ist, dass sie das vom Fahrer auf das Lenkrad (4) aufgebrachte Drehmoment (T_{d}) sowie dessen Ableitung nach der Zeit (DT_{d}) als Funktion der Steigung (β) der Fahrstrecke des Fahrzeugs berechnet oder abschätzt.

6. Vorrichtung gemäß Anspruch 4 oder 5, wobei die Prozessoreinrichtung (ECU) so aufgebaut ist, dass sie das vom Fahrer auf das Lenkrad (4) aufgebrachte Drehmoment (T_{d}) sowie dessen Ableitung nach der Zeit (DT_{d}) als Funktion der momentanen Position des Fahrzeugs innerhalb einer Fahrbahn berechnet oder abschätzt, die von einer Abtasteinrichtung (11) bestimmt wird, die dem Fahrzeug zugeordnet ist.

7. Vorrichtung gemäß irgendeinem der bisherigen Ansprüche, wobei die Prozessoreinrichtung (ECU) so aufgebaut ist, dass sie das vom Fahrer auf das Lenkrad (4) aufgebrachte Drehmoment (T_{d}) sowie dessen Ableitung nach der Zeit (DT_{d}) als Funktion jener Werte berechnet oder abschätzt, die man von zumindest einem zweiten Parameter erhält, der von der Wechselwirkung zwischen dem Fahrzeug und dem Boden abhängt.

8. Vorrichtung gemäß Anspruch 7, wobei die Prozessoreinrichtung (ECU) so aufgebaut ist, dass sie das vom Fahrer auf das Lenkrad (4) aufgebrachte Drehmoment (T_{d}) sowie dessen Ableitung nach der Zeit (DT_{d}) als Funktion des Gierwinkels (ψ) des Fahrzeugs und dessen Ableitung nach der Zeit sowie der Seitenbeschleunigung (a_{y}) des Fahrzeugs berechnet oder abschätzt.

9. Vorrichtung gemäß Anspruch 6, wobei die Prozessoreinrichtung (ECU) so aufgebaut ist, dass sie die Querbewegung des Kraftfahrzeugs berechnet und das oben erwähnte erste Anzeigesignal erzeugt, wenn die Querbewegung des Fahrzeugs einen ersten vorgegebenen Schwellenwert überschreitet, bevor die oben erwähnte erste Bezugszeit (TL0) abgelaufen ist.

10. Vorrichtung gemäß Anspruch 9, wobei die Prozessoreinrichtung (ECU) so aufgebaut ist, dass sie das oben erwähnte zweite Anzeigesignal erzeugt, wenn die Querbewegung des Fahrzeugs einen vorgegebenen zweiten Schwellenwert überschreitet, der größer als der erste Schwellenwert ist, bevor die oben erwähnte zweite Bezugszeit (TL₁) abgelaufen ist.

11. Vorrichtung gemäß irgendeinem der bisherigen Ansprüche, wobei die Prozessoreinrichtung (ECU) so aufgebaut ist, dass sie
- das vom Fahrer auf das Lenkrad (4) aufgebrachte Drehmoment (T_{d}) sowie dessen Ableitung nach der Zeit (DT_{d}) mit entsprechenden dritten Schwellenwerten (Tₛᵤₚ; DT₃) vergleicht; und
- ein Signal erzeugt, das anzeigt, dass ein gefährliches Manöver ausgeführt wird, wenn die Ableitung (DT_{d}) den zugeordneten dritten Schwellenwert (DT₃) für ein Intervall mit vorgegebener Dauer (TL3) überschreitet und das vom Fahrer auf das Lenkrad (4) aufgebrachte Drehmoment (T_{d}) am Ende dieses Intervalls (TL3) den zugeordneten dritten Schwellenwert (T_{SUP}) überschreitet.

12. Vorrichtung gemäß Anspruch 11, wobei die Prozessoreinrichtung (ECU) weiters so aufgebaut ist, dass sie
- das vom Fahrer auf das Lenkrad (4) aufgebrachte Drehmoment (T_{d}) sowie dessen Ableitung (DT_{d}) mit entsprechenden vorgegebenen vierten Schwellenwerten (T_{INF}; DT₄) vergleicht, die niedriger als die oben erwähnten dritten Schwellenwerte (T_{SUP}; DT₃) sind;
- ein Signal erzeugt, das angibt, dass ein gefährliches Manöver ausgeführt wird, wenn die oben erwähnte Ableitung (DT_{d}) für ein Intervall mit vorgegebener Dauer (TL4) auf einem Pegel zwischen dem zugeordneten dritten und vierten Schwellenwert (DT₃; DT₄) bleibt, und wenn das vom Fahrer auf das Lenkrad (4) aufgebrachte Drehmoment (T_{d}) ansteigt und am Ende dieses Intervalls (TL4) größer als der dritte Schwellenwert (T_{SUP}) ist; und
- ein Signal erzeugt, das den Zustand eines plötzlichen Loslassens des Lenkrads (4) anzeigt, wenn die Ableitung (DT_{d}) während des oben erwähnten Intervalls mit vorgegebener Dauer (TL4) auf einem Pegel zwischen dem zugeordneten dritten und vierten Schwellenwert (DT₃; DT₄) bleibt, und wenn das vom Fahrer auf das Lenkrad (4) aufgebrachte Drehmoment (T_{d}) abnimmt und am Ende dieses Intervalls (TL4) kleiner als der zugeordnete vierte Schwellenwert (T_{INF}) ist.

## Revendications

1. Equipement destiné à détecter l'action d'un conducteur sur le volant (4) du système de direction (1) d'un véhicule motorisé, comprenant
un premier moyen de capteur (6) destiné à fournir des signaux indiquant l'angle de braquage (θ),
un deuxième moyen de capteur (7) destiné à fournir des signaux indiquant le couple total (T) agissant sur la colonne ou l'arbre de direction (5), et
un moyen de traitement électronique (ECU) connecté auxdits premier et deuxième moyens de capteurs (6, 7) et associé à un moyen de mémoire (M) dans lequel sont mémorisées des données représentant un modèle mathématique du système de direction (1), ledit moyen de traitement (ECU) étant conçu
- pour générer, sur la base des signaux fournis par lesdits moyens de capteurs (6, 7) et ledit modèle du système de direction (1), des signaux ou des données indiquant le couple (T_{d}) appliqué par le conducteur au volant (4) et sa dérivée par rapport au temps (DT_{d}),
- pour comparer le couple (T_{d}) appliqué par le conducteur au volant (4) et sa dérivée par rapport au temps (DT_{d}) à une première valeur de seuil de couple (T₂) et une première valeur de seuil de la dérivée du couple (DT₂) respectivement, et
- pour générer un premier signal d'indication lorsque le couple (T_{d}) appliqué par le conducteur au volant (4) et sa dérivée (DT_{d}) restent tous deux simultanément en dessous des premières valeurs de seuil respectives mentionnées ci-dessus (T₂ ; DT₂) pour au moins un premier temps de référence (TL0) d'une durée prédéterminée.

2. Equipement selon la revendication 1, dans lequel ledit moyen de traitement (ECU) est également conçu
- pour comparer le couple (T_{d}) appliqué par le conducteur au volant (4) et sa dérivée par rapport au temps (DT_{d}) à une deuxième valeur de seuil de couple (T₁) et à une deuxième valeur de seuil de la dérivé du couple (DT₁) respectivement, ces valeurs étant supérieures aux premières valeurs de seuil mentionnées ci-dessus (T₂ ; DT₂), et
- pour générer un deuxième signal d'indication lorsque le couple (T_{d}) appliqué par le conducteur au volant (4) et sa dérivée (DT_{d}) restent tous deux simultanément en dessous des valeurs de seuil associées (T₁ ; DT₁) pour au moins un temps de référence (TL1) d'une durée prédéterminée.

3. Equipement selon la revendication 1 ou 2, dans lequel le véhicule motorisé est doté d'un système de direction assistée commandé électriquement (20, 21) destiné à générer, en d'autres termes destiné à appliquer à la colonne ou l'arbre de direction (5), un couple dont l'ampleur correspond à un signal de demande de couple (s_{T}) provenant d'un système de commande associé, l'équipement (10) étant **caractérisé en ce que** ledit moyen de traitement (ECU) est conçu pour modifier les valeurs de seuil mentionnées ci-dessus du couple (T₁, T₂) et de la dérivée de couple (DT₁, DT₂) en fonction du signal de demande de couple mentionné ci-dessus (s_{T}).

4. Equipement selon l'une quelconque des revendications précédentes, dans lequel ledit moyen de traitement (ECU) est conçu pour calculer ou estimer le couple (T_{d}) appliqué par le conducteur au volant (4) et sa dérivée par rapport au temps (DT_{d}) en fonction des valeurs prélevées par au moins un premier paramètre détecté qui dépend de la géométrie du trajet du véhicule.

5. Equipement selon la revendication 4, dans lequel ledit moyen de traitement (ECU) est conçu pour calculer ou estimer le couple (T_{d}) appliqué par le conducteur au volant (4) et sa dérivée par rapport au temps (DT_{d}) en fonction de l'inclinaison (β) du trajet du véhicule.

6. Equipement selon la revendication 4 ou 5, dans lequel ledit moyen de traitement (ECU) est conçu pour calculer ou estimer le couple (T_{d}) appliqué par le conducteur au volant (4) et sa dérivée par rapport au temps (DT_{d}) en fonction de la position instantanée du véhicule dans une voie de circulation, déterminée par un moyen de détection (11) associé au véhicule.

7. Equipement selon l'une quelconque des revendications précédentes, dans lequel ledit moyen de traitement (ECU) est conçu pour calculer ou estimer le couple (T_{d}) appliqué par le conducteur au volant (4) et sa dérivée par rapport au temps (DT_{d}) en fonction des valeurs prélevées par au moins un deuxième paramètre qui dépend de l'interaction entre le véhicule et le sol.

8. Equipement selon la revendication 7, dans lequel ledit moyen de traitement (ECU) est conçu pour calculer ou estimer le couple (T_{d}) appliqué par le conducteur au volant (4) et sa dérivée par rapport au temps (DT_{d}) en fonction de l'angle de lacet (ψ) du véhicule et de sa dérivée par rapport au temps, et de l'accélération latérale (a_{y}) du véhicule.

9. Equipement selon la revendication 6, dans lequel ledit moyen de traitement (ECU) est également conçu pour calculer le mouvement transversal du véhicule motorisé et pour générer le premier signal d'indication mentionné ci-dessus lorsque le déplacement transversal du véhicule dépasse une première valeur de seuil prédéterminée avant la fin du premier temps de référence mentionné ci-dessus (TL0).

10. Equipement selon la revendication 9, dans lequel ledit moyen de traitement (ECU) est également conçu pour générer le deuxième signal d'indication mentionné ci-dessus lorsque le déplacement transversal du véhicule dépasse une deuxième valeur de seuil prédéterminée, qui est supérieure à la première, avant la fin du deuxième temps de référence (TL1) mentionné ci-dessus.

11. Equipement selon l'une quelconque des revendications précédentes, dans lequel ledit moyen de traitement (ECU) est également conçu
- pour comparer le couple (T_{d}) appliqué par le conducteur au volant (4) et sa dérivée par rapport au temps (DT_{d}) aux troisièmes valeurs de seuil prédéterminées respectives (T_{SUP}; DT₃), et
- pour générer un signal indiquant qu'une manoeuvre dangereuse est en cours d'exécution lorsque ladite dérivée (DT_{d}) dépasse ladite troisième valeur de seuil associée (DT₃) pour une période d'une durée prédéterminée (TL3) et que le couple (T_{d}) appliqué par le conducteur au volant (4) dépasse la troisième valeur de seuil associée (T_{SUP}) à la fin de cette période (TL3).

12. Equipement selon la revendication 11, dans lequel ledit moyen de traitement (ECU) est également conçu
- pour comparer le couple (T_{d}) appliqué par le conducteur au volant (4) et sa dérivée (DT_{d}) aux quatrièmes valeurs de seuil prédéterminées respectives (T_{INF} ; DT₄) qui sont inférieures aux troisièmes valeurs de seuil mentionnées ci-dessus (T_{SUP}; DT₃),
- pour générer un signal indiquant qu'une manoeuvre dangereuse est en cours d'exécution lorsque la dérivée (DT_{d}) mentionnée ci-dessus reste à un niveau entre les troisième et quatrième valeurs de seuil associées (DT₃ ; DT₄) pour une période d'une durée prédéterminée (TL4) et que le couple (T_{d}) appliqué par le conducteur au volant (4) augmente et devient supérieur à la troisième valeur de seuil associée (T_{SUP}) à la fin de cette période (TL4), et
- pour générer un signal indiquant une condition d'un relâchement soudain du volant (4) lorsque ladite dérivée (DT_{d}) reste à un niveau entre les troisième et quatrième valeurs de seuil associées (DT₃ ; DT₄) pour la période mentionnée ci-dessus d'une durée prédéterminée (TL4) et que le couple (T_{d}) appliqué par le conducteur au volant (4) diminue et devient inférieur à la quatrième valeur de seuil associée (T_{INF}) à la fin de cette période (TL4).
